# EUROPÄISCHE PATENTSCHRIFT

(11) **EP 3 436 284 B1**
(45) Veröffentlichungstag und Bekanntmachung des Hinweises auf die Patenterteilung: **05.04.2023**
(21) Anmeldenummer: 17712788.3
(22) Anmeldetag: 24.03.2017
(51) Int. Cl.: B42D 25/41

(54) **VERFAHREN ZUM PARTIELLEN EINFÄRBEN VON KUNSTSTOFFTEILEN**
METHOD FOR THE PARTIAL COLOURING OF PLASTIC PARTS
PROCEDE DE COLORATION PARTIELLE DE PIECES EN PLASTIQUE

(30) Priorität: 29.03.2016 EP 16162536
(43) Veröffentlichungstag der Anmeldung: 06.02.2019
(73) Patentinhaber: Covestro Deutschland AG, 51373 Leverkusen (DE)
(72) Erfinder: TZIOVARAS, Georgios, 41464 Neuss (DE); PIERMATTEO, Ciro, 51379 Leverkusen (DE)
(74) Vertreter: Levpat
(86) Internationale Anmeldenummer: PCT/EP2017/057036
(87) Internationale Veröffentlichungsnummer: WO 2017/167651

(56) Entgegenhaltungen:
- EP-A1- 2 179 857
- WO-A1-03/083207
- WO-A1-2004/050767
- WO-A1-2005/033218
- WO-A1-2006/042714
- WO-A1-2010/089035
- DE-A1-102010 019 683
- US-A1- 2005 277 714
- DATABASE WPI Week 201209 Thomson Scientific, London, GB; AN 2012-B18093 XP002761504, -& JP 2012 011689 A (UNIV OSAKA) 19. Januar 2012 (2012-01-19)

## Beschreibung

Die vorliegende Erfindung betrifft ein Verfahren zum partiellen Einfärben, insbesondere zum farbigen Lasergravieren, von Kunststoffteilen, insbesondere thermoplastische Kunststoffteile, ganz besonders thermoplastische Kunststoffteile, umfassend einen Schichtaufbau sowie die resultierenden partiell eingefärbten, vorzugsweise farbig lasergravierten, Kunststoffteile, insbesondere thermoplastische Kunststoffteile.

Die Möglichkeit Kunststoffteile farbig mittels Laser zu gravieren ist von Interesse für die gesamte Industrie der Kunststoffteilefertigung. Von Interesse ist hierbei die farbige Lasergravur von dreidimensional geformten Kunststoffteilen z.B. für die Automobilindustrie. So können z. B. Schalter, Blenden, usw. mit farbigen Symbolen graviert werden. Dabei können auch Kunststoffteile mittels Laser farbig graviert werden, welche eine Lackierung für deren Oberflächenschutz aufweisen. Der Laserstrahl entfernt die Lackschicht und gleichzeitig migriert der Farbstoff an dieser Stelle in die Kunststoffoberfläche ein. Es können auch ungeschützte Kunststoffoberflächen farbig lasergraviert werden und anschließend lackiert werden, um eine durchgehende glänzende Erscheinung der Kunststoffteile zu gewährleisten und Schutz gegen Kratzer und chemischer Beschädigung zu bieten. Bislang können solche farbigen Symbole beispielsweise im ersten Fertigungsschritt durch Kunststoffspritzguss mit mehreren farbigen Komponenten hergestellt werden. In einem zweiten Fertigungsschritt müssen die Kunststoffteile mit einer deckenden Farbe lackiert werden. In einem dritten Fertigungsschritt muss die Farbschicht mittels Laser graviert werden um die darunterliegende Kunststoffoberfläche freizulegen. Optional kann in einem vierten Fertigungsschritt ein Schutzlack aufgetragen werden.

Alternativ können transparente Kunststofffolien rückseitig farbig graviert werden und anschließend mit einem Thermoplasten hinterspritzt werden, entsprechend dem Verfahren Film Insert Moulding, um glänzende oder einheitlich aussehende Oberflächen zu erhalten. Dieses Verfahren wird beispielsweise in EP-A 0691201 Beispiel 1 offenbart.

Auf dem Markt der Sicherheits- und/oder Wertdokument, insbesondere IdentifikationsDokumente (ID-Dokumente) besteht der Bedarf für farbiges Personalisieren dieser Dokumente mittels Laser. Das Personalisieren von ID- Dokumenten, welche teilweise oder komplett aus Polymerfolien bestehen, durch das Verfahren der Lasergravur stellt den Stand der Technik dar. Jedoch erstellen die bislang bekannten Verfahren in den Dokumenten lediglich Bilder und Texte in verschiedenen Graustufen. Farbige Elemente können durch Lasergravur nicht erstellt werden. Nur in Kombination mit zuvor drucktechnisch aufgetragenen Farbschichten, welche nachträglich mittels Laser verändert werden, ist es möglich farbige Bilder in oder auf Kunststoffteilen zu generieren.

In den letzten Jahren wurden insbesondere im Bereich der Sicherheits- und/oder Wertdokumente, insbesondere ID-Dokumente, Verfahren entwickelt, welche das Erstellen von farbigen Elementen in diesen Dokumenten, die ganz oder teilweise aus Polymerfolien aufgebaut sind, erlauben. Diese Verfahren sind jedoch mit erheblichem technischem Aufwand verbunden. Alle Verfahren beinhalten einen Druckprozess um die Farbgebung zu realisieren.

WO-A 03/056507 offenbart ein Verfahren, bei welchen ein farbiges Bild mittels Lasergravur wie folgt entstehen kann: Auf einer Folie, auf deren Fläche später ein farbiges Bild entstehen soll, wird vollflächig eine Farbe aufgedruckt, die mit einer bestimmten Wellenlänge von Laserlicht reagiert. Die Reaktion äußert sich in Verbleichen der Farbpigmente, sobald diese vom Laser belichtet werden. Bei der Verwendung von drei Arten von Pigmenten, z.B. rot, gelb, blau, die bei drei verschiedenen Wellenlängen reagieren, ist es möglich vollfarbige Bilder zu erstellen, indem die Pigmente an den laserbestrahlten Stellen entsprechend gebleicht werden. Dieses Verfahren ist jedoch besonders aufwändig, da drei verschiedene Laserquellen verwendet werden müssen und die Farbe vollflächig auf die Oberfläche aufgedruckt werden muss. Dadurch ist die Verbundhaftung der Folien nach dem Laminieren im Bereich des Bildes nicht ausreichend gut ist.

Ein weiteres Verfahren wird in EP-A 2752302 offenbart und basiert auf dem Prinzip eines Farbdisplays: Auf Folien werden schmale Linien in den Basisfarben rot, gelb, blau gedruckt. Diese Linien werden anschließend mittels Laser selektiv geschwärzt um den Eindruck eines Farbbildes entstehen zu lassen. Auch dieses Verfahren ist aufwändig, da im Vorfeld sehr exakt gedruckt werden muss, um das Bild entstehen zu lassen. Außerdem ist die Auflösung des Bildes sehr grob, da die Linien einen Abstand von ca. 80 µm nicht unterschreiten können, und die Bilder erscheinen dunkel, da ein Großteil der Bildfläche durch den Laser geschwärzt wird.

In JP-A 2012-011688 wird Bedrucken von Folien mittels Ink-Jet als weiteres Verfahren beschrieben. Dabei werden die Druckmotive konventionell mittels Ink-Jet Drucker auf die Folie gedruckt und die Tinte mittels Laser fixiert. Dieses Verfahren ist vergleichbar zu dem weit verbreiteten UV- aushärtendem Tintensystem. Hier wird lediglich anstelle UV- Licht ein Laser zum Fixieren der Tinten verwendet. Bei diesem Verfahren verbleibt die Tinte auf der Kunststoffoberfläche. Dabei ist dieses Verfahren insbesondere für das Gravieren von Sicherheitsdokumenten nicht geeignet weil die Tinten von der Kunststoffoberfläche abgetragen werden können.

JP-A 2012-011689 offenbart eine Methode und eine Apparatur zur farbigen Laserbedruckung auf Formteile ohne das Substrat zu beschädigen. Bei diesem Verfahren wird die Tinte mittels Inkjet auf das Formteil aufgebracht und dann wird diese Tinte mittels Laserstrahl auf dem Formteil fixiert.

EP-A 2179857 offenbart Schichtaufbauten für lasergravurbeschreibbare ID-Karten, welche eine zusätzliche Schicht aufweisen, die nach der Lasergravur auf den Kartenkörper aufgebracht wird und so das nachträgliche Beschreiben der Karte mittels Lasergravur und damit das Verfälschen der enthaltenden Informationen einschränkt bzw. vollständig verhindert. Farbiges Lasergravieren wird nicht offenbart.

WO-A 2005/033218 offenbart Eisenblau-Pigment enthaltende Lackzusammensetzung, die zur Herstellung einer lasergravierfähigen Lackschicht geeignet ist, die sich mit einem Laser schmauchspuren- und rückstandsfrei lasergravieren lässt. Durch die Lasergravur wird die Lackschicht abgetragen und so die entsprechende Information aufgebracht.

JP 2012 011 689 A offenbart eine Methode zur Einfärbung von Substraten durch Bedrucken des Substrats mit Farbe und anschließendem Laserbeschuss der Oberfläche des Substrats durch die Farbe hindurch.

Dieses Verfahren benötigt für jede, gewünschte Farbe ein separates Bedrucken der Gesamtoberfläche des Substrats und anschließendem Entfernen der überschüssigen Farbe, was sehr ineffizient ist.

Es war daher Aufgabe der vorliegenden Erfindung ein verbessertes und einfaches Verfahren zum partiellen Einfärben, insbesondere für das farbige Lasergravieren, von Kunststoffteilen, bevorzugt von thermoplastischen Kunststoffteilen, ganz besonders von Kunststofffolien und/oder Folienschichtverbunden bereit zu stellen.

Diese Aufgabe wurde überraschenderweise gelöst durch das in Anspruch 1 definierte erfindungsgemäße Verfahren zum partiellen Einfärben, insbesondere farbigen Lasergravieren, von Kunststoffteilen.

Im Rahmen dieser Erfindung wird unter "im Wesentlichen" verstanden, dass lediglich an den in Schritt iii) bestrahlten Stellen ein farbiges Element entsteht, welches mit den Auge als sichtbares farbiges Element eindeutig zu erkennen ist. Es ist hierbei nicht ausgeschlossen, dass eine leichte Einfärbung des Kunststoffteils an den nicht bestrahlten Stellen erfolgen kann.

Das erfindungsgemäße Verfahren zeichnet sich dadurch aus, dass eine partielle Einfärbung des Kunststoffteils, insbesondere thermoplastisches Kunststoffteils, im Wesentlichen an den in Schritt iii) bestrahlten Stellen erfolgt. Das restliche Kunststoffteil weist keine bzw. nur eine sehr schwache Einfärbung an den nicht bestrahlten Bereichen auf. Somit ist es möglich, gezielt Bereiche des Kunststoffteils einzufärben, um beispielsweise Bild, Personalisierung, Logo, Symbol oder Schriftzug auf dieses Kunststoffteil durch das erfindungsgemäße Verfahren aufzubringen. Diese lassen sich nicht ohne Weiteres von der Kunststoffoberfläche entfernen. Somit eignet sich das erfindungsgemäße Verfahren insbesondere für den Bereich der Herstellung von Sicherheits- und Identifikationsdokumente.

Insbesondere bei Bestrahlung mit Laserstrahlung erreichen diese farbigen Elemente besonders hohe Auflösungen von 5000 dpi und gegebenenfalls auch höher. Das erfindungsgemäße Verfahren erfordert weder eine hochpräzise Drucktechnik noch den Einsatz verschiedener Laserstärken, sofern die Bestrahlung in Schritt iii) mit Laserstrahlung erfolgt. Zudem ist das erfindungsgemäße Verfahren für das Aufbringen von farbigen Elementen sowohl auf dreidimensionalen Kunststoffteilen als auch auf Folien und/oder Folienschichtverbunden geeignet.

Im erfindungsgemäßen Verfahren können eine Vielzahl an Kunststoffteilen, insbesondere thermoplastische Kunststoffteile eingesetzt werden. Bei den vorzugsweise thermoplastischen Kunststoffteilen kann es sich besonders bevorzugt um einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, handeln. Für bestimmte Anwendungen, wie beispielsweise im Bereich der Identifikationsdokumente, kann es vorteilhaft und demnach bevorzugt sein, einen transparenten thermoplastischen Kunststoff einzusetzen.

Besonders geeignete thermoplastische Kunststoffe sind ein oder mehrere Polycarbonat(e) oder Copolycarbonat(e) auf Basis von Diphenolen, Poly- oder Copolyacrylat(e) und Poly- oder Copolymethacrylat(e) wie beispielhaft und vorzugsweise Polymethylmethacrylat bzw. Poly(meth)acrylat (PMMA), Poly- oder Copolymer(e) mit Styrol wie beispielhaft und vorzugsweise Polystyrol (PS), Acrylnitril-Butadien-Styrol (ABS), oder Polystyrolacrylnitril (SAN), thermoplastische Polyurethan(e), sowie Polyolefin(e), wie beispielhaft und vorzugsweise Polypropylentypen oder Polyolefine auf der Basis von cyclischen Olefinen (z.B. TOPAS^{™}, Hoechst), Poly- oder Copolykondensat(e) der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT) ), Polyamid (PA), Poly- oder Copolykondensat(e) der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Mischungen aus den vorangehend genannten oder deren Blends.

Besonders bevorzugte thermoplastische Kunststoffe sind ein oder mehrere Polycarbonat(e) oder Copolycarbonat(e) auf Basis von Diphenolen oder Blends enthaltend wenigstens ein Polycarbonat oder Copolycarbonat. Ganz besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten Mw von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten Mw von 10.000 bis 200.000, bevorzugt von 21.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexandimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenylcycloalkane der Formel (Ia) 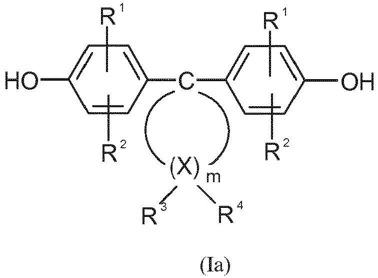 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha -Stellung zu dem Diphenylsubstituierten C-Atom (C-1) sind bevorzugt nicht dialkylsubstituiert, dagegen ist die Alkyldisubstitution in beta-Stellung zu C-1 bevorzugt. Besonders bevorzugte Dihydroxydiphenylcycloalkane der Formen1 (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

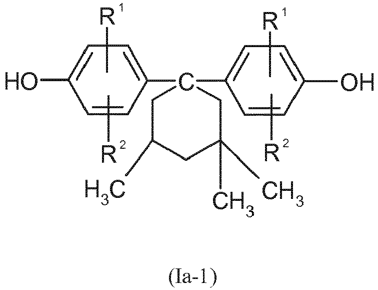

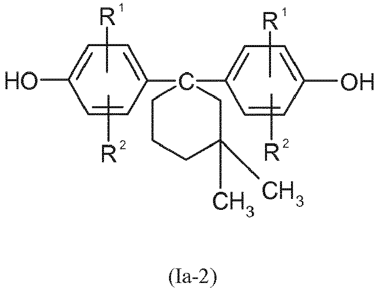

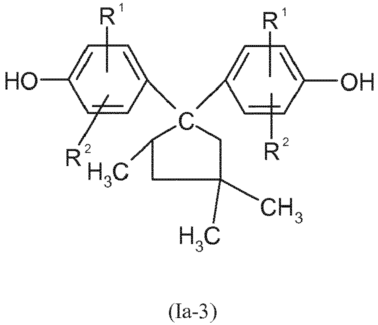

Ein ganz besonders bevorzugtes Dihydroxydiphenylcycloalkane der Formen1 (la) ist 1,1-Bis-(4-hydroxyphenyl)-3,3,5-trimethyl-cyclohexan (Formel (Ia-1) mit R¹ und R² gleich H).

Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 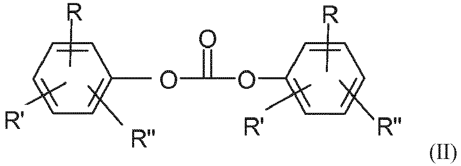 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch - COO-R‴ bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat. Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 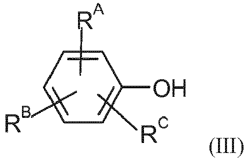 wobei
R^{A} für lineares oder verzweigtes C₁-C₃₄-Alkyl, C₇-C₃₄-Alkylaryl, C₆-C₃₄-Aryl oder für - COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat. Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Das Kunststoffteil enthaltend die vorstehend genannten thermoplastischen Polymere kann extrudiert, co-extrudiert, gegossen, dreidimensional gedruckt und/oder spritzgegossen sein. Es kann sich bei dem Kunststoffteil auch um ein dreidimensionales Kunststoffteil handeln. Weiterhin ist es möglich, dass es sich bei dem Kunststoffteil auch um Folien, Folienschichtverbunde und/oder Platten handeln kann, als auch um deren Kombinationen z.B. hinterspritzte Folien, die die vorstehend beschriebenen Polymere enthalten. Besonders bevorzugt ist das Kunststoffteil eine Folie, Folienschichtverbund und/oder eine Platte, enthaltend die vorstehend genannten Polymere, die durch Extrusion und/oder Coextrusion hergestellt werden.

Das Färbungsbad kann auf eine Temperatur bis 99 °C erwärmt werden. Hierdurch kann die Intensität der partiellen Einfärbung je nach verwendetem Polymer im Kunststoffteil verbessert werden. Bei Bestrahlung der Kunststoffteile in einem Autoklaven kann das Färbungsbad auch auf 150°C erwärmt werden, wenn das die Wärmeformbeständigkeit der Kunststoffteile zulässt In einer bevorzugten Ausführungsform des erfindungsgemäßen Verfahrens beträgt die Temperatur des Färbungsbads ≤ 70 °C, bevorzugt ≥ 10 °C bis ≤ 60 °C, besonders bevorzugt > 15°C bis ≤ 50°C.

Das Färbungsbad kann mindestens ein Farbmittel, vorzugsweise mindestens einen Farbstoff, besonders bevorzugt mindestens einen Farbstoff der Gruppe Solvent Dyes und/oder Dispers Dyes gemäß Klassifizierung des Colour Index oder Mischungen aus diesen Farbstoffen umfassen.

Der Colour Index (CI) der Society of Dyers and Colourists und der American Association of Textile Chemists and Colorists charakterisiert alle Farbmittel eindeutig durch den Gruppennamen und den Zahlen für die chemische Zusammensetzung bzw. chemische Struktur.

Farbstoffe der Gruppe der Solvent Dyes gemäß Klassifizierung des Colour Index können beispielsweise die sogenannten Macrolex^{™} Farbstoffe der Firma Lanxess AG, Deutschland sein. Beispielhaft genannt sind Macrolex ^{™} Blau 3R, Macrolex ^{™} Rot H, Macrolex ^{™} Gelb 6G (Solvent Yellow 179 gemäß CI), Macrolex ^{™} Violet Rot R (Dispers Violet 31 gemäß CI), Macrolex ^{™} orange R (Solvent Orange 107 gemäß CI) oder Mischungen aus diesen Farbstoffe.

Farbstoffe der Gruppe der Dispers Dyes gemäß Klassifizierung des Colour Index können beispielsweise Diazo-, Diphenylamin- und Anthrachinonverbindungen, Acetatfarbstoffe, Dispersionsfarbstoffe und/oder Dispersolfarbstoffe sein und schließen Dispers-Blau #3, Dispers-Blau #14, Dispers-Gelb #3, Dispers-Rot #134 und Dispers-Rot#7 ein. Die Klassifikation und Bezeichnung der vorstehend zitierten Farbstoffe stimmen mit "The Colour Index", 3. Ausgabe, gemeinsam veröffentlicht von the Society of Dyes and Colors und the American Association of Textile Chemists and Colorists (1971) überein. Die Farbstoffe können ganz allgemein entweder als einziger Farbstoffbestandteil oder als Komponente einer Mischung in Abhängigkeit von der gewünschten Farbe angewandt werden. Somit schließt der hier verwendete Begriff des Farbstoffs auch die Farbstoffmischung ein.

Unter den geeigneten Farbstoffen sind wasserunlösliche Diazo-Diphenylamin- und Anthrachinonverbindungen zu nennen. Besonders geeignet sind Acetat-Farbstoffe, dispergierte Acetat-Farbstoffe, Dispersionsfarbstoffe und Dispersol-Farbstoffe, wie sie im Colour Index 3. Auflage, Band 2, The Societey of Dyers and Colourists, 1971. S. 2479 bzw. 2187-2743 offenbart sind.

Die bevorzugten dispergierten Farbstoffe schließen Dystar's Palanil Blau E-R150 (Anthrachinon/Dispers-Blau), DIANIX Orange E-3RN (Azofarbstoff/Cl Dispers-Orange 25) und die vorstehend genannten Macrolex ^{™} Farbstoffe als Solvent Dyes ein.

In einer Ausführungsform umfasst das Färbungsbad:
a) Lösungsmittel und/oder Dispergiermittel, vorzugsweise Wasser und/oder organisches Lösungsmittel, besonders bevorzugt Wasser
b) Farbmittel, vorzugsweise einen Farbstoff, besonders bevorzugt einen Farbstoff der Solvent Dyes und/oder Dispers Dyes gemäß Klassifizierung des Colour Index.

Vorteilhaft haben sich solche Färbungsbäder erwiesen, die zum gleichmäßigen Einfärben von Polycarbonat-Kunststoffteilen bei Temperaturen > 80 °C geeignet sind. Diese werden beispielsweise beschrieben in WO-A 03/ 040461, EP-A 2050866, WO-A 03/083207. Unter den Bedingungen des erfindungsgemäßen Verfahrens erfolgt im Wesentlichen eine partielle Einfärbung des Kunststoffteils an den bestrahlten Bereichen, so dass genau an diesen Stellen eine intensiver Gravur sichtbar wird.

In einer weiteren Ausführungsform der Erfindung umfasst daher das Färbungsbad zusätzlich zu den bereits genannten Komponenten a) und b)
c) mindestens ein weiteres Lösungsmittel gemäß der Strukturformel (I)

   R-[(O-(CH₂)ₘ)ₙ-]OH (I),

   worin R ein Ethyl-, Propyl- oder Butylrest,
   m 2, 3 oder 4 und
   n 1, 2 oder 3 sind,
   mit der Maßgabe, dass wenn R Butyl ist, m 2 oder 4 ist,
d) mindestens ein Nivelliermittel gemäß der Strukturformel (II):

   H-[(O-(CH₂)ₘ)ₙ-]OH (II),

   worin m 2, 3 oder 4 und
   n 1, 2 oder 3 sind.

Die Komponenten a) bis d) können in den folgenden Mengen bezogen auf das Gesamtgewicht des Färbungsbades enthalten sein:
a) 50,0 bis 99,99 Gew.-%, vorzugsweise 62,5 bis 90,0 Gew.-%, besonders bevorzugt 65,0 bis 85,0 Gew.-%,
b) 0,01 bis 15,0 Gew.-%, vorzugsweise 0,1 bis 5,0 Gew.-%, besonders bevorzugt 0,2 bis 4,0 Gew.-%,
c) 0 bis 35,0 Gew.-%, vorzugsweise 1,0 bis 30,0 Gew.-%, besonders bevorzugt 5,0 bis 25,0 Gew.-%,
d) 0 bis 30,0 Gew.-%, vorzugsweise 1,0 bis 20,0 Gew.-%, besonders bevorzugt 3,0 bis 15,0 Gew.-%.

In einer weiteren Ausführungsform des erfindungsgemäßen Verfahren umfasst das Färbungsbad einen Farbstoff und/oder eine Farbstoffmischung ausgewählt aus der Gruppe der Dispers Dyes gemäß Klassifizierung des Colour Index, ganz besonders einen Farbstoff ausgewählt aus der Gruppe bestehend aus Azo-, Diphenylamin- und Anthrachinonverbindungen.

In einer anderen bevorzugten Ausführungsform des erfindungsgemäßen Verfahrens umfasst das Färbungsbad einen Farbstoff und/oder eine Farbstoffmischung aus der Gruppe der Solvent Dyes gemäß Klassifizierung des Colour Index, ganz besonders bevorzugt einen Farbstoff und/oder Farbstoffmischung der Makrolex ^{™} Farbstoffe.

Als Lösungsmittel und/oder Dispergiermittel a) kann Wasser und/oder organische Lösungsmittel eingesetzt werden. Vorzugsweise wird Wasser eingesetzt.

Als organische Lösungsmittel kommen alle gängigen Lösungsmittel in Frage, die das Kunststoffteil bei Kontakt nicht angreifen. Beispielhaft genannt sind Butylalkohol, Butylenglykol, Diethylenglykol, Ethylalkohol, Ethylenglykol, Heptan, Hexan, Pentan, Propargylalkohol, Propylalkohol oder Mischungen der vorstehend genannten.

Vorzugsweise wird im erfindungsgemäßen Verfahren Wasser und c) eingesetzt.

Die Bestrahlung des Kunststoffteils in Schritt iii) erfolgt mit fokussierter nicht-ionisierender elektromagnetischer Strahlung, vorzugsweise fokussierter nicht-ionisierender elektromagnetischer Strahlung mit einer Wellenlänge im Bereich von ≥ 0,1µm bis ≤ 1 mm, besonders bevorzugt fokussierter nicht-ionisierender elektromagnetischer Strahlung mit einer Wellenlänge im Bereich von ≥ 0,15 µm bis ≤ 20 µm, ganz besonders bevorzugt mit Laserstrahlung mit einer Wellenlänge im Bereich von ≥ 0,15 µm bis ≤ 20 µm.

Sofern die Bestrahlung mit dem Laser erfolgt, kann dies im Dauerstrichbetrieb (CW-Laser) erfolgen. Besonders bevorzugt wird gepulste Laserstrahlung für die Bestrahlung der Kunststoffteile eingesetzt. Hierbei ist bereits eine Pulsdauer des Lasers von Bruchteilen von Sekunden ausreichend, um an den Laser-bestrahlten Stellen eine Färbung des Kunststoffteils zu erzielen. Vorzugsweise werden Pulsdauern von 10⁻¹⁸ bis 10⁻¹ Sekunden, besonders bevorzugt Pulsdauern von 10⁻⁹ bis 10⁻² Sekunden, ganz besonders bevorzugt Pulsdauern von 10⁻⁶ bis 10⁻³ Sekunden eingesetzt.

Durch Variation der Leistung des eingesetzten Laserstrahls für die Bestrahlung in Schritt iii) kann die Intensität der Einfärbung an den gelaserten Stellen beeinflusst werden, je nach dem welche Anforderung an die gewünschte Anwendung gestellt wird. Je höher die eingesetzte Laserleistung ist, desto intensiver wird die Einfärbung an den gelasterten Stellen des Kunststoffteils. Mit dem mittleren Leistungsbereich eines 7,5 Watt Markierungslasers können ausreichend gute farbige Gravuren erzielt werden. Im Pulsbetrieb können signifikant höhere Leistungen und damit auch intensivere Einfärbungen im Kunststoffteil erzielt werden.

Vorzugsweise werden im erfindungsgemäßen Verfahren NdYAG-Laser (Neodym-dotierte Yttrium-Aluminium-Granat-Laser) eingesetzt. Je kürzer die Pulse desto höher die Pulsspitzenleistungen. Bei Pulslängen von 15 ns bis 400 ns können Pulsspitzen von 100 kJ erzielt werden. Es können aber für das farbige Lasergravieren von Kunststoffteilen auch solche Lasertypen eingesetzt werden, die für das Gravieren und Schweißen von Kunststoffen geeignet sind. So kann beispielsweise auch ein CO₂-Laser eingesetzt werden.

Im erfindungsgemäßen Verfahren kann die Tauchtiefe des Kunststoffteils in das Färbungsbad in Schritt i) Einfluss auf die Intensität der Einfärbung nach der Bestrahlung in Schritt iii) haben. Unter Tauchtiefe versteht man im Sinne dieser Erfindung die Eindringtiefe der eingesetzten Strahlung in das Färbungsbad bis zur Oberfläche des Kunststoffteils, auf das die partielle Einfärbung aufgebracht werden soll. Insgesamt sollte die Tauchtiefe nicht zu tief sein, da die Intensität der eingesetzten Strahlung abnimmt, je größer die Eindringtiefe der eingesetzten Strahlung in das Färbungsbad bis zur Kunststoffoberfläche ist. Idealerweise beträgt die Tauchtiefe des Kunststoffteils in das Färbungsbad in Schritt i) in einer Ausführungsform ≤ 120 mm, vorzugsweise 0,01 bis 100 mm, besonders bevorzugt 0,1 bis 20 mm und ganz besonders bevorzugt 0,1 bis 5,0 mm.

Sofern die Oberfläche des Kunststoffteils speziell vorbehandelt wird, um die Oberflächenenergie zu erhöhen, beispielsweise durch Plasmabehandlung, Koronabehandlung, Beflammen oder chemische Behandlung der Kunststoffteile, können noch geringere Tauchtiefen des Kunststoffteils in Schritt i) erzielt werden. Beispielsweise kann durch die verbesserte Benetzung der Kunststoffoberfläche durch das Färbungsbad die Tauchtiefe nur 0,015 mm betragen.

Die Farbkonzentration des Färbungsbads kann auch einen Einfluss auf die Intensität der partiellen Einfärbung des Kunststoffteils nach der Bestrahlung haben. Bevorzugt ist eine Konzentration an Farbstoff b) von 0,01 bis 15,0 Gew.%, besonders bevorzugt von 0,1 bis 5,0 Gew.%, ganz besonders bevorzugt von 0,2 bis 4,0 Gew.% bezogen auf das Gesamtgewicht des Färbungsbads.

In einer Ausführungsform des erfindungsgemäßen Verfahrens wird ein Formteil aus Kunststoff, welches in einem Spritzgießwerkzeug nach bekannten Verfahren wie beispielsweise gemäß dem In-Mold-Decoration (IMD), Film-Insert-Molding (FIM) oder High-Pressure-Forming (HPF) Verfahren hergestellt wird, eingesetzt.

In einer weiteren Ausführungsform des erfindungsgemäßen Verfahrens handelt es sich bei dem Kunststoffteil um einen Schichtaufbau, enthaltend wenigstens eine Schicht eines thermoplastischen Kunststoffes ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Poly- oder Copolykondensat(e) der Terephthalsäure, Poly- oder Copolykondensate der Naphthalindicarbonsäure, Poly- oder Copolykondensat(e) wenigstens einer Cycloalkyldicarbonsäure, oder Mischungen aus diesen, besonders bevorzugt um ein oder mehrere Polycarbonat(e) oder Copolycarbonat(e) auf Basis von Diphenolen oder Blends enthaltend wenigstens ein Polycarbonat oder Copolycarbonat handelt.

In einer weiteren Ausführungsform umfasst der Schichtaufbau wie vorstehend beschrieben eine weitere Schicht enthaltend wenigstens einen thermoplastischen Kunststoff und wenigstens ein lasersensibles Additiv. Solche Schichtaufbauten sind beispielsweise bekannt aus WO-A 2010/089035 und eignen sich zum Lasergravieren in Schwarz-Weiß, insbesondere für die personalisierte Lasergravur von Sicherheitsdokumenten, und ganz besonders von Identifikationsdokumenten.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von NdYAG-Lasem (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs ^{™} kommerziell angeboten. Weiterhin als lasersensible Additive geeignete Absorber sind Ruß, sowie phosphorhaltige Zinn-Kupfer-Mischoxide wie z.B. in WO-A 2006/042714 beschrieben, bevorzugte lasersensible Additive sind Schwarzpigmente, ein besonders bevorzugtes lasersensibles Additiv ist Ruß.

Wenigstens eine Schicht enthaltend wenigstens einen thermoplastischen Kunststoff kann zudem wenigstens einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Das Füllen einer Schicht enthaltend wenigstens einen thermoplastischen Kunststoff mit wenigstens einem solchen Füllstoff verbessert die Sichtbarkeit der eingebrachten Beschriftung bzw. Abbildung(en), wodurch auch die Wahrnehmung der verbesserten Schärfe und Auflösung weiter erhöht wird. Dieser Schichtaufbau ist bekannt aus der WO-A 2010/089035 und wird dort ausführlich beschrieben.

Mit den vorstehend genannten Schichtaufbauten besteht die Möglichkeit, die erfindungsgemäße farbige Lasergravur mit der schwarzen Lasergravur zu kombinieren. Hierzu wird das Kunststoffteil, umfassend den vorstehend beschriebenen Schichtaufbau, in ein Färbungsbad der zu erzielenden Färbung wie bereits vorstehend ausführlich beschrieben, eingetaucht (Schritt i und ggfs. Schritt ii)) und anschließend mit einem Laserstrahl bestrahlt (Schritt iii)) um die farbige Lasergravur auf den Schichtaufbau zu applizieren. In einem weiteren Schritt iv) wird das Färbungsbad entfernt, um mit dem gleichen Laserstrahl die schwarze Gravur auf die Oberfläche des Schichtaufbaus an der gewünschten Stelle aufzubringen (Schritt v). Die hohe Laserreaktivität dieser Schichtaufbauten führt bei Lasergravur außerhalb des Färbungsbads zu einer Schwärzung an den mit Laser bestrahlten Stellen. Befindet sich der Schichtaufbau im Färbungsbad, dann wird die Intensität des Laserstrahls durch das Färbungsbad so gemindert, so dass lediglich eine Färbung an den bestrahlten Stellen erfolgt, aber keine Schwärzung der Oberfläche des Schichtaufbaus verursacht wird.

### Beispiele

Beim zu färbenden Kunststoffteil handelt es sich um eine Kunststofffolie aus Polycarbonat (Makrofol ^{™} ID 4-4-010207 200 µm opak weiß) der Firma Covestro Deutschland AG.

### Beispiel 1: Zusammensetzung des Färbungsbades

69,31 Gew.-% Wasser
0,99 Gew.-% Macrolex ^{™} Blau 3R (Farbstoff, der Firma Lanxess AG Deutschland)
19,8 Gew.-% Ethylenglykolbutylether (EGBE), (Lösungsmittel, The Dow Chemical Company)
9,9 Gew.-% Teile Diethylenglykol (DEG), (Nivelliermittel, Merck KGaA)

### Verfahren zum farbigen Lasergravieren

Zur Laserbestrahlung wurde ein NdYAG Laser der Firma Foba verwendet, Model D84 mit einer Laserleistung von ca. 7,5 Watt, einer Laserfrequenz von 8 KHz im Pulsbetrieb und einer Stromstärke von 8 A. Die Vorschubgeschwindigkeit des Lasers, Tauchtiefe und die Temperatur des Färbungsbads ist in Tabelle 1 angegeben.

Die Folie Makrofol ^{™} ID 4-4-010207 200 µm opak weiß wurde in das Färbungsbad gemäß der Angaben in Tabelle 1 eingetaucht. Das Färbungsbad mit der Folie wurde auf den Werkstückträger einer Foba D84S Laseranlage platziert. Der Fokus des Lasers wurde auf die Folienoberfläche justiert. Die Angabe zur Tauchtiefe ist der Tabelle 1 zu entnehmen. Unter Tauchtiefe versteht man im Sinne dieser Erfindung die Eindringtiefe der eingesetzten Strahlung in das Färbungsbad bis zur Oberfläche des Kunststoffteils, auf das die partielle Einfärbung aufgebracht werden soll. Es wurde mit dem Laserstrahl bestrahlt.

**Tabelle 1: Bedingungen des farbigen Lasergravierens**

| | **Beispiel 2** | **Beispiel 3** |
|---|---|---|
| Färbungsbad | Beispiel 1 | Beispiel 1 |
| Temperatur des Färbungsbad | 40 °C | 40 °C |
| Tauchtiefe | 1 mm | 1 mm |
| Vorschubgeschwindigkeit | 100 mm/s | 500 mm/s |

Es konnte bei beiden Beispielen gezeigt werden, dass an den Stellen, die mit dem Laserstrahl bestrahlt wurden, auf der Folie eine intensive blaue Einfärbung in Form des eingestrahlten Laserstrahls auf der Folie auftrat. Die Bereiche der Folie, die nicht mit dem Laser bestrahlt wurden, wurden nicht Wesentlich eingefärbt. Bei der Vorschubgeschwindigkeit von 100 mm/s ist eine intensivere Färbung der Folie zu beobachten.

## Patentansprüche

1. Verfahren zum partiellen Einfärben von Kunststoffteilen, enthaltend die Schritte
i) Eintauchen eines Kunststoffteils in ein Färbungsbad,
ii) gegebenenfalls Erwärmen des Färbungsbads,
iii) Bestrahlung des Kunststoffteils aus i) und ggfs. ii) mit fokussierter nicht-ionisierender elektromagnetischer Strahlung mit einer Wellenlänge im Bereich von ≥ 0,15 µm bis ≤ 20 µm, ganz besonders bevorzugt mit Laserstrahlung einer Wellenlänge im Bereich von ≥ 0,15 µm bis ≤ 20 µm,
wobei die partielle Einfärbung im Wesentlichen nur an den in Schritt iii) bestrahlten Stellen erfolgt.

2. Verfahren gemäß Anspruch 1, **dadurch gekennzeichnet, dass** Schritt iii) mittels Laserstrahlung einer Wellenlänge im Bereich von ≥ 0,15 µm bis ≤ 20 µm erfolgt.

3. Verfahren gemäß Anspruch 1 oder 2, **dadurch gekennzeichnet, dass** das Färbungsbad mindestens ein Farbmittel, vorzugsweise mindestens einen Farbstoff, oder Mischungen aus diesem umfasst.

4. Verfahren gemäß Anspruch 1 bis 3, **dadurch gekennzeichnet, dass** das Färbungsbad mindestens einen Farbstoff der Gruppe Solvent Dyes und/oder Dispers Dyes gemäß Klassifizierung des Colour Index oder Mischungen aus diesen Farbstoffen umfasst.

5. Verfahren gemäß Anspruch 1 bis 4, **dadurch gekennzeichnet, dass** die Tauchtiefe des Kunststoffteils in Schritt i) ≤ 120 mm, vorzugsweise 0,01 bis 100 mm, besonders bevorzugt 0,1 bis 20 mm beträgt.

6. Verfahren gemäß Anspruch 1 bis 5, **dadurch gekennzeichnet, dass** das Färbungsbad umfasst:
a) Wasser und/oder organisches Lösungsmittel,
b) mindestens ein Farbmittel, vorzugsweise mindestens einen Farbstoff, besonders bevorzugt mindestens einen Farbstoff der Solvent Dyes und/oder Dispers Dyes gemäß Klassifizierung des Colour Index oder einer Mischung aus diesen Farbstoffen.

7. Verfahren gemäß Anspruch 6, **dadurch gekennzeichnet, dass** das Färbungsbad weiterhin umfasst:
c) mindestens ein Lösungsmittel gemäß der Strukturformel (I)
R-[(O-(CH₂)ₘ)ₙ-]OH (I),
worin R ein Ethyl-, Propyl- oder Butylrest,
m 2, 3 oder 4 und
n 1, 2 oder 3 sind,
mit der Maßgabe, dass wenn R Butyl ist, m 2 oder 4 ist,
d) mindestens ein Nivelliermittel gemäß der Strukturformel (II):
H-[(O-(CH₂)ₘ)ₙ-]OH (II),
worin m 2,3 oder 4 und
n 1, 2 oder 3 sind.

8. Verfahren gemäß Anspruch 7, **dadurch gekennzeichnet, dass** die Komponenten a) bis d) in folgenden Mengen, bezogen auf das Gesamtgewicht der Farblösung enthalten sind:
a) 50 bis 99,99 Gew.-%, vorzugsweise 62,5 bis 90,0 Gew.-%, besonders bevorzugt 65,0 bis 85,0 Gew.-%,
b) 0,01 bis 15,0 Gew.-%, vorzugsweise 0,1 bis 5,0 Gew.-%, besonders bevorzugt 0,2 bis 4,0 Gew.-%
c) 0 bis 35,0 Gew.-%, vorzugsweise 1,0 bis 30,0 Gew.-%, besonders bevorzugt 5,0 bis 25,0 Gew.-%,
d) 0 bis 30,0 Gew.-%, vorzugsweise 1,0 bis 20,0 Gew.-%, besonders bevorzugt 3,0 bis 15,0 Gew.-%.

9. Verfahren gemäß Anspruch 1 bis 8, **dadurch gekennzeichnet, dass** das Kunststoffteil mindestens einen thermoplastischen Kunststoff umfasst, ausgewählt aus der Gruppe bestehend aus ein oder mehrere Polycarbonat(e) oder Copolycarbonat(e) auf Basis von Diphenolen, Poly- oder Copolyacrylat(e) und Poly- oder Copolymethacrylat(e) Poly- oder Copolymer(e) mit Styrol, thermoplastische Polyurethan(e), sowie Polyolefin(e), Poly- oder Copolykondensat(e) der Terephthalsäure, Poly- oder Copolykondensat(e) der Naphthalindicarbonsäure, Poly- oder Copolykondensat(e) wenigstens einer Cycloalkyldicarbonsäure, Mischungen aus den vorangehend genannten oder deren Blends.

10. Verfahren gemäß Anspruch 9, **dadurch gekennzeichnet, dass** das Kunststoffteil ein Formteil ist.

11. Verfahren gemäß einem der Ansprüche 1 bis 9, **dadurch gekennzeichnet, dass** es sich bei dem Kunststoffteil um einen Schichtaufbau enthaltend wenigstens eine Schicht eines thermoplastischen Kunststoffes ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, thermoplastische Polyurethan(e), sowie Polyolefin(e), Poly- oder Copolykondensat(e) der Terephthalsäure, Poly- oder Copolykondensate der Naphthalindicarbonsäure, Poly- oder Copolykondensat(e) wenigstens einer Cycloalkyldicarbonsäure, Mischungen aus diesen oder deren Blends, besonders bevorzugt um ein oder mehrere Polycarbonat(e) oder Copolycarbonat(e) auf Basis von Diphenolen oder Blends enthaltend wenigstens ein Polycarbonat oder Copolycarbonat handelt.

12. Verfahren gemäß Anspruch 11, **dadurch gekennzeichnet, dass** der Schichtaufbau eine weitere Schicht enthaltend wenigstens einen thermoplastischen Kunststoff und wenigstens ein lasersensibles Additiv, vorzugsweise ein Schwarzpigment, besonders bevorzugt Ruß, umfasst.

13. Verfahren gemäß Anspruch 13, **dadurch gekennzeichnet, dass** das Verfahren weiterhin die Schritte umfasst:
iv) Entfernung des Färbungsbades,
v) Bestrahlung mit dem gleichen Laserstrahl wie in Schritt iii).

14. Kunststoffteil erhältlich durch das Verfahren gemäß einem der Ansprüche 1 bis 13.

## Claims

1. Process for partial colouring of plastic parts containing the steps of
i) immersing a plastic part in a colouring bath,
ii) optionally heating the colouring bath, iii)irradiating the plastic part from i) and optionally ii) with focused nonionizing electromagnetic radiation having a wavelength in the range from ≥ 0.15 µm to ≤ 20 pm, very particularly preferably with laser radiation having a wavelength in the range from ≥ 0.15 µm to ≤ 20 pm,
wherein the partial colouring is effected substantially only at the sites irradiated in step iii) .

2. Process according to Claim 1, **characterized in that** step iii) is carried out using laser radiation having a wavelength in the range from ≥ 0.15 µm to ≤ 20 µm.

3. Process according to Claim 1 or 2, **characterized in that** the colouring bath comprises at least one colorant, preferably at least one dye or mixtures thereof.

4. Process according to any of Claims 1 to 3, **characterized in that** the colouring bath comprises at least one dye from the group of solvent dyes and/or disperse dyes according to the Colour Index classification or mixtures of these dyes.

5. Process according to any of Claims 1 to 4, **characterized in that** the immersion depth of the plastic part in step i) is ≤ 120 mm, preferably 0.01 to 100 mm, particularly preferably 0.1 to 20 mm.

6. Process according to any of Claims 1 to 5, **characterized in that** the colouring bath comprises:
a) water and/or organic solvent,
b) at least one colorant, preferably at least one dye, particularly preferably at least one dye from the solvent dyes and/or disperse dyes according to the Colour Index classification or a mixture of these dyes.

7. Process according to Claim 6, **characterized in that** the colouring bath further comprises:
c) at least one solvent of structural formula (I)
R-[(O-(CH₂)ₘ)ₙ-]OH (I),
in which R is an ethyl, propyl or butyl radical,
m is 2, 3 or 4 and
n is 1, 2 or 3,
with the proviso that when R is butyl, m is 2 or 4,
d) at least one levelling agent of structural formula (II):
H-[(O-(CH₂)ₘ)ₙ-]OH (II),
in which m is 2, 3 or 4 and
n is 1, 2 or 3.

8. Process according to Claim 7, **characterized in that** components a) to d) are present in the following amounts based on the total weight of the colouring solution:
a) 50.0% to 99.99% by weight, preferably 62.5% to 90.0% by weight, particularly preferably 65.0% to 85.0% by weight,
b) 0.01% to 15.0% by weight, preferably 0.1% to 5.0% by weight, particularly preferably 0.2% to 4.0% by weight,
c) 0% to 35.0% by weight, preferably 1.0% to 30.0% by weight, particularly preferably 5.0% to 25.0% by weight,
d) 0% to 30.0% by weight, preferably 1.0% to 20.0% by weight, particularly preferably 3.0% to 15.0% by weight.

9. Process according to any of Claims 1 to 8, **characterized in that** the plastic part comprises at least one thermoplastic plastic selected from the group consisting of one or more polycarbonate(s) or copolycarbonate(s) based on diphenols, poly- or copolyacrylate(s) and poly- or copolymethacrylate(s), polymer(s) or copolymer(s) with styrene, thermoplastic polyurethane(s) and also polyolefin(s), poly- or copolycondensate(s) of terephthalic acid, poly- or copolycondensate(s) of naphthalenedicarboxylic acid, poly- or copolycondensate(s) of at least one cycloalkyldicarboxylic acid, mixtures of the aforementioned or blends thereof.

10. Process according to Claim 9, **characterized in that** the plastic part is a moulded part.

11. Process according to any of Claims 1 to 9, **characterized in that** the plastic part is a layer construction containing at least one layer of a thermoplastic plastic selected from polymers of ethylenically unsaturated monomers and/or polycondensates of bifunctional reactive compounds, preferably one or more polycarbonate(s) or copolycarbonate(s) based on diphenols, poly- or copolyacrylate(s) and poly- or copolymethacrylate(s), poly- or copolymer(s) of styrene, thermoplastic polyurethane(s) and polyolefin(s), poly- or copolycondensate(s) of terephthalic acid, poly- or copolycondensate(s) of naphthalenedicarboxylic acid, poly- or copolycondensate(s) of at least one cycloalkyldicarboxylic acid, mixtures of the aforementioned or blends thereof, particularly preferably one or more polycarbonate(s) or copolycarbonate(s) based on diphenols or blends containing at least one polycarbonate or copolycarbonate.

12. Process according to Claim 11, **characterized in that** the layer construction comprises a further layer containing at least one thermoplastic plastic and at least one laser-sensitive additive, preferably a black pigment, particularly preferably carbon black.

13. Process according to Claim 1, **characterized in that** the process further comprises the steps of:
iv) removing the colouring bath,
v) irradiating with the same laser beam as in step iii) .

14. Plastic part obtainable by the process according to any of Claims 1 to 13.

## Revendications

1. Procédé de coloration partielle de pièces en plastique, contenant les étapes
i) immersion d'une pièce en plastique dans un bain de teinture,
ii) éventuellement chauffage du bain de teinture,
iii) irradiation de la pièce en plastique de i) et éventuellement de ii) avec un rayonnement électromagnétique non ionisant focalisé ayant une longueur d'onde dans la plage de ≥ 0,15 µm à ≤ 20 pm, d'une manière tout particulièrement préférée avec un rayonnement laser ayant une longueur d'onde dans la plage de ≥ 0,15 µm à ≤ 20 pm,
la coloration partielle ayant lieu essentiellement uniquement sur les zones irradiées dans l'étape iii).

2. Procédé selon la revendication 1, **caractérisé en ce que** l'étape iii) est mise en œuvre à l'aide d'un rayonnement laser ayant une longueur d'onde dans la plage de ≥ 0,15 µm à ≤ 20 µm.

3. Procédé selon la revendication 1 ou 2, **caractérisé en ce que** le bain de teinture comprend au moins une matière colorante, de préférence au moins un colorant, ou des mélanges de celui-ci.

4. Procédé selon les revendications 1 à 3, **caractérisé en ce que** le bain de teinture comprend au moins un colorant du groupe Solvent Dyes et/ou Disperse Dyes, selon la classification du Color Index, ou des mélanges de ces colorants.

5. Procédé selon les revendications 1 à 4, **caractérisé en ce que** la profondeur d'immersion de la pièce en plastique, dans l'étape i), est ≤ 120 mm, de préférence de 0,01 à 100 mm, d'une manière particulièrement préférée de 0,1 à 20 mm.

6. Procédé selon les revendications 1 à 5, **caractérisé en ce que** le bain de teinture comprend :
a) de l'eau et/ou un solvant organique,
b) au moins une matière colorante, de préférence au moins un colorant, d'une manière particulièrement préférée au moins un colorant parmi les Solvent Dyes et/ou les Disperse Dyes selon la classification du Colour Index, ou un mélange de ces colorants.

7. Procédé selon la revendication 6, **caractérisé en ce que** le bain de teinture comprend en outre :
c) au moins un solvant de formule développée (I)
R-[(C-(CH₂)ₘ)ₙ-]OH (I),
dans laquelle R représente un radical éthyle, propyle ou butyle,
m représente 2, 3 ou 4 et
n représente 1, 2 ou 3,
à la condition que, quand R représente un butyle, m représente 2 ou 4,
d) au moins un agent d'unisson de formule développée (II) :
H-[(O-(CH₂)ₘ)ₙ-]OH (II),
dans laquelle m représente 2, 3 ou 4 et
n représente 1, 2 ou 3.

8. Procédé selon la revendication 7, **caractérisé en ce que** les composants a) à d) sont présents en les quantités suivantes, rapportées au poids total de la solution colorante :
a) 50 à 99,99 % en poids, de préférence 62,5 à 90,0 % en poids, d'une manière particulièrement préférée 65,0 à 85,0 % en poids,
b) 0,01 à 15,0 % en poids, de préférence 0,1 à 5,0 % en poids, d'une manière particulièrement préférée 0,2 à 4,0 % en poids,
c) 0 à 35,0 % en poids, de préférence 1,0 à 30,0 % en poids, d'une manière particulièrement préférée 5,0 à 25,0 % en poids,
d) 0 à 30,0 % en poids, de préférence 1,0 à 20,0 % en poids, d'une manière particulièrement préférée 3,0 à 15,0 % en poids.

9. Procédé selon les revendications 1 à 8, **caractérisé en ce que** la pièce en plastique comprend au moins un plastique thermoplastique, choisi dans le groupe consistant en un ou plusieurs polycarbonates ou copolycarbonates à base de diphénols, poly- ou copolyacrylates et poly- ou copolyméthacrylates, poly- ou copolymères avec du styrène, polyuréthanes thermoplastiques ainsi que polyoléfines, poly- ou copolycondensats de l'acide téréphtalique, poly- ou copolycondensats de l'acide naphtalène dicarboxylique, poly- ou copolycondensats d'au moins un acide cycloalkyldicarboxylique, mélange des plastiques ci-dessus, ou leurs mélanges intimes.

10. Procédé selon la revendication 9, **caractérisé en ce que** la pièce en plastique est une pièce moulée.

11. Procédé selon l'une des revendications 1 à 9, **caractérisé en ce que**, pour ce qui concerne la pièce en plastique, il s'agit d'une structure stratifiée contenant au moins une couche d'un plastique thermoplastique choisi parmi les polymères de monomères à insaturation éthylénique et/ou les polycondensats de composés réactifs bifonctionnels, de préférence d'un ou plusieurs polycarbonates ou copolycarbonates à base de diphénols, poly- ou copolyacrylates et poly- ou copolyméthacrylates, poly- ou copolymères avec du styrène, polyuréthanes thermoplastiques, ainsi que polyoléfines, poly- ou copolycondensats de l'acide téréphtalique, poly- ou copolycondensats de l'acide naphtalène dicarboxylique, poly- ou copolycondensats d'au moins un acide cycloalkyldicarboxylique, mélanges de ceux-ci ou leurs mélanges intimes, d'une manière particulièrement préférée d'un ou plusieurs polycarbonates ou copolycarbonates à base de diphénol ou de mélanges intimes contenant au moins un polycarbonate ou un copolycarbonate.

12. Procédé selon la revendication 11, **caractérisé en ce que** la structure stratifiée comprend une couche supplémentaire contenant au moins un plastique thermoplastique et au moins un additif sensible au laser, de préférence un pigment noir, d'une manière particulièrement préférée du noir de carbone.

13. Procédé selon la revendication 1, **caractérisé en ce que** le procédé comprend en outre les étapes :
iv) élimination du bain de teinture,
v) irradiation avec le même faisceau laser que dans l'étape iii).

14. Pièce en plastique pouvant être obtenue par le procédé selon l'une des revendications 1 à 13.
